# EUROPEAN PATENT APPLICATION

(11) **EP 0 990 689 A2**
(43) Date of publication of application: **05.04.2000**
(21) Application number: 99870196.5
(22) Date of filing: 30.09.1999
(51) Int. Cl.: C09K 3/22

(54) **Compositions, method and articles for treating footing material in a performance arena**

(30) Priority: 01.10.1998 US 102658 P
(71) Applicant: The Procter & Gamble Company, Cincinnati, Ohio 45202 (US)
(72) Inventor: Baier, Edward Kenneth, Cincinnati, Ohio 45247 (US); Piotrowski, Stanley Adam, Naperville, Il 60564 (US); Walker, Dennis Mark, West Chester, Ohio 45069 (US); Del Greco, Angela Gloria, Cincinnati, Ohio 45241-3621 (US); Morrison, Lowen Robert Jr., Cincinnati, Ohio 45241 (US); Holthaus, Donna Lynn, Goshen, Ohio 45122 (US); Kelly, Ephriam Lamar, Batavia, Ohio 45103 (US); Gibson, Micheal Steven, Loveland, Ohio 45140 (US); Gibson, Mary Celine, Loveland, Ohio 45140 (US); Ward, Thomas Edward, Oregonia, Ohio 45054 (US); Keefer, Richard Mackay, Omemee, Ontario KOL 2WO (CA)
(74) Representative: Gault, Nathalie

(57) **Abstract**

Compositions for treating footing material in a performance arena to effectively suppress dust, improve the texture of the footing material, prevent animals and humans from eating the footing material, and prevent the drying and cracking of animal hooves, comprise glycerine, liquid carrier, and optional ingredients. Methods of using the compositions to effectively suppress dust, improve the texture of the footing material, prevent animals and humans from eating the footing material, and prevent the drying and cracking of animal hooves are disclosed. Articles of manufacture are disclosed comprising (1) a container, (2) a glycerine composition, and (3) a set of instructions for carrying out said methods.

## Description

### CROSS-REFERENCE TO RELATED APPLICATION

This application claims the benefit of U.S. Provisional Application Serial No. 60/102,658, filed October 1, 1998.

### FIELD OF THE INVENTION

The present invention relates to compositions containing glycerine, liquid carrier, and other optional ingredients, for treating footing material in a performance arena. The present invention also relates to methods of using, and articles of manufacture containing, such compositions to achieve, e.g., dust suppression benefits, especially in and around performance arenas.

### BACKGROUND OF THE INVENTION

The problems associated with footing material, such as dust problems and footing instability, are particularly evident in performance arenas including, but not limited to, indoor and outdoor horse arenas, sports fields, baseball diamonds, recreational areas, golf sand bunkers, race tracks, livestock buildings, rodeo arenas, tractor-pull arenas, moto-cross arenas, and other similar arenas. Dust suppression is especially important in performance arenas, in particular horse arenas, where the floors typically comprise dirt, soil, wood-chip, sawdust, peat moss, clay, and/or sand footing material, and mixtures thereof, several inches thick to cushion the feet of the horses against injury during strenuous activity and to provide a smooth ride for equestrian riders. The movement of vehicles, large animals, such as horses, and athletes in such arenas create excessive amounts of dust, exacerbated by the pulverizing of the footing material which tends to increase the atmospheric content of respirable dust particles, i.e., those having diameters less than 5 µm. Respirable particles present the greatest health implications to both animals and humans, as they can be deposited deep in the lungs. As a result, the airborne dust particles can be objectionable for athletes and animals utilizing the performance arena, as well as for spectators, and respiratory problems can be created and/or multiplied by the presence of respirable dust particles.

Water is often used to suppress dust in performance arenas, but it has a number of drawbacks. First, water readily evaporates when used in hot climates or during summer months, especially when under direct sunlight. Evaporation of water is also problematic during winter months, as humidity levels tend to be low during winter months. Typically, water is applied at least once every seven days in order to effectively suppress dust in an arena. While water is relatively inexpensive, the necessity of frequent treatments adds significantly to the cost of maintaining the footing material in a performance arena. Second, water has a relatively high freezing point, so its use and effectiveness is typically limited to periods in which the temperature is above 0°C (32°F). Third, while water is effective for suppressing overall dust, it is not as effective in suppressing respirable dust particles, i.e. those having diameters of less than about 5 µm, which are the root of many respiratory problems and diseases. Fourth, water treatments also tend to make the footing material muddy, which can impede the movement of athletes or animals about the footing material. Muddy conditions make the footing more slippery and dangerous for animals and athletes utilizing the performance arena, possibly resulting in serious injuries.

Calcium chloride compositions have been used primarily under conditions of low temperature and humidity to suppress dust in performance arenas, but such compositions are not ideal. Calcium chloride is a desiccant, so it is able to absorb moisture and is able to suppress dust as a result. However, at 25°C, calcium chloride does not attract and retain moisture at a relative humidity of less than about 31%. Thus, calcium chloride is not very useful in arid climates where dust is particularly troublesome. In addition, calcium chloride can absorb moisture from animal hooves, especially horse hooves, which will dry out the hooves. Dry hooves are more brittle and are susceptible to cracking, causing discomfort and possible bacterial infections. Calcium chloride also tends to be corrosive to vehicles, machinery, and equipment used in and around performance arenas. Also, dust particles carrying chlorides tend to be especially irritating to the respiratory tracts of animals and humans.

Various oils have also been used to treat footing material in performance arenas, especially for suppressing dust, but have their own drawbacks. Specifically, oils can cause footing material to stick to animal hooves, athletic shoes, and equipment, and can also impart an undesirable texture to the footing material, tending to make it somewhat slippery. Slippery conditions in a performance arena are especially dangerous to athletes and animals using the performance arena and can lead to serious injuries. Additionally, participants, e.g. horse riders, and equipment tend to become covered with the oil used to treat the footing material, requiring significant clean-up efforts. Petroleum-derived oils also cause environmental concerns since they are not readily biodegradable. Vegetable oils, including soybean, canola, and cottonseed oils, that have relatively low melting points also have a high degree of unsaturation. As a result, these highly unsaturated oils tend to oxidize, especially in warm climates or in direct sunlight, and can produce odors that are offensive to athletes, animals, and spectators in and around performance arenas.

Glycerine has been suggested for controlling dust in horse arenas, but has been noted to be expensive. *See* Tamara L. Showalter, *Put Your Best Footing Forward,* EQUUS, Feb. 1989, Vol. 136, pp. 35-38. It has not previously been appreciated that glycerine does not sufficiently distribute across the surface of the footing material in a horse arena when applied, requiring significant effort to mix the glycerine into the footing material in order to be effective for controlling dust. Also, glycerine, being "sweet," would not be expected to exacerbate the tendency of horses to eat footing material, a highly undesirable, but fairly common, habit.

It has thus been desired to find ways of treating footing material in a performance arena to effectively suppress dust, especially respirable dust particles, improve the texture of the footing material, prevent animals and humans from eating the footing material in and around such arenas, and prevent the drying and cracking of animal hooves.

### SUMMARY OF THE INVENTION

The present invention relates to compositions for treating footing material in a performance arena to effectively suppress dust, improve the texture of the footing material, prevent animals and humans from eating the footing material in and around such arenas, and/or prevent the drying and cracking of animal hooves. The present compositions comprise:
(a) from about 5% to about 90%, preferably from about 20% to about 80%, more preferably from about 30% to about 70%, of glycerine;
(b) from about 5% to about 99.5%, preferably from about 20% to about 80%, more preferably from about 30% to about 60%, of liquid carrier selected from the group consisting of water, alcohol solvent, and mixtures thereof;
(c) optionally, from about 0.1% to about 20%, preferably from about 0.5% to about 10%, more preferably from about 1% to about 5%, of emulsifier, preferably selected from the group consisting of soap, food-grade emulsifiers, and/or synthetic surfactants, e.g. anionic surfactants like sulfates and/or sulfonates, and/or nonionic surfactants such as sorbitan monoesters and monoglycerides, including, but not limited to, glycerol monostearate, glycerol monolaurate, glycerol monooleate, and glycerol monopalmitate; and mixtures thereof;
(d) optionally, from about 0.0001% to about 1%, preferably from about 0.001% to about 0.5%, more preferably from about 0.05% to about 0.1%, of bittering agent;
(e) optionally, from about 0.1% to about 5%, preferably from about 0.2% to about 2%, more preferably from about 0.5% to about 1%, of corrosion inhibitor;
(f) optionally, from about 1 ppm to about 100 ppm, preferably from about 1 ppm to about 10 ppm, more preferably from about 3 ppm to about 7 ppm, of antimicrobial agent;
(g) optionally, from about 0.2% to about 2%, preferably from about 0.2% to about 1%, more preferably from about 0.2% to about 0.5%, of mold inhibitor;
(h) optionally, from about 0.1% to about 20%, preferably from about 0.5% to about 10%, more preferably from about 1% to about 5%, of insect repellent;
(i) optionally, perfume; and
(j) optionally, colorant;
wherein said compositions have a freezing point of less than about 0°C, preferably less than about -15°C, more preferably less than about -45°C; and a viscosity, at 20°C, of less than about 1150 centipoises ("cPs"), preferably less than about 200 cPs, more preferably less than about 22 cPs, and even more preferably less than about 10 cPs; and preferably contain an effective amount of at least one of the materials in (c) through (j).

The present invention also encompasses methods of treating footing material in a performance arena comprising the step of contacting the footing material with at least an effective amount of glycerine, preferably using the compositions of the present invention. In general, the present compositions are applied to the footing material to provide glycerine at a level of from about 4 L/m³ to about 128 L/m³. For coarse sand footing material, the present compositions are typically applied to provide glycerine at a level of from about 4 L/m³ to about 20 L/m³, preferably from about 6 L/m³ to about 10 L/m³, more preferably from about 7 L/m³ to 9 L/m³. For fine sand footing material, the present compositions are applied to provide glycerine at a level of from about 20 L/m³ to about 80 L/m³, preferably from about 30 L/m³ to about 50 L/m³, more preferably from about 35 L/m³ to 45 L/m³. For organic footing material, the present compositions are applied to provide glycerine at a level of from about 32 L/m³ to about 128 L/m³, preferably from about 48 L/m³ to about 80 L/m³, more preferably from about 56 L/m³ to 72 L/m³.

The present invention also encompasses articles of manufacture for treating footing material in a performance arena comprising: (1) a container; (2) compositions as described herein; and (3) a set of instructions in association with said container to provide the details a consumer needs to follow the methods of the present invention.

### BRIEF DESCRIPTION OF THE DRAWINGS

**FIG. 1** of the drawings is a digital photograph of footing material taken five minutes after treatment with 100 ml of a composition containing 100% refined glycerine.

**FIG. 2** of the drawings is a digital photograph of footing material taken five minutes after treatment with 100 ml of a composition containing 90% refined glycerine and 10% water.

**FIG. 3** of the drawings is a digital photograph of footing material taken five minutes after treatment with 100 ml of a composition containing 80% refined glycerine and 20% water.

**FIG. 4** of the drawings is a digital photograph of footing material taken five minutes after treatment with 100 ml of a composition containing 75% refined glycerine and 25% water.

**FIG. 5** of the drawings is a digital photograph of footing material taken five minutes after treatment with 100 ml of a composition containing 70% refined glycerine and 30% water.

### DETAILED DESCRIPTION OF THE INVENTION

The present invention encompasses compositions, methods, and articles of manufacture for treating footing material in a performance arena to effectively suppress dust, especially respirable dust particles, improve the texture of footing material, prevent animals from eating footing material in and around such arenas, and/or prevent the drying and cracking of animal hooves.

As used herein, the terms "effective dust suppression" and "effectively suppress dust" mean that an area generally described by observers as dusty has a noticeably lower dust level after treating the area with at least an effective amount of a composition of the present invention. Quantitatively, the average total dust levels in the "personal breathing zone," meaning from about three feet to about ten feet above the treated footing material, are preferably less than about 1.0 mg/m³, more preferably less than about 0.1 mg/m³, and even more preferably less than about 0.01 mg/m³, as measured by a personal air sampler. Dust measurements can be read from the air sampler by filtering sampled air, weighing the filter before and after sampling, and dividing the weight of dust by the amount of air sampled. Alternatively, dust levels can be read in real time every one to five seconds by passing the sampled air through a calibrated light-scattering detector. By placing specially-designed filters or dust cyclones on the air inlet to the detector, the dust monitor can detect inhaleable particles (<100 µm diameter), thoracic particles (<10 µm diameter), and respirable particles (<5 µm diameter).

As used herein, the term "performance arena" is meant to include indoor and outdoor horse arenas, sports fields, baseball diamonds, recreational areas, golf sand bunkers, race tracks, livestock buildings, rodeo arenas, tractor-pull arenas, moto-cross arenas, and other similar arenas.

As used herein, the term "footing material" refers to material used to cover the surface of a performance arena, including stalls and bedding material. Footing material typically comprises dirt, soil, wood-chip, peat moss, sawdust, clay, and/or sand footing material, and mixtures thereof, and is typically several inches thick.

As used herein, the term "coarse sand" refers to footing material containing a mixture of particles and comprising at least about 50% sand or clay and having a mean particle size greater than about 300 microns.

As used herein, the term "fine sand" refers to footing material containing a mixture of particles and comprising at least about 50% sand or clay and having a mean particle size less than about 300 microns.

As used herein, the term "organic footing" refers to footing material containing a mixture of particles and comprising at least about 50% carbon-based material, typically including sawdust, peat moss, wood chips, soil, manure, or ground rubber.

As used herein, the term "glycerine" means the chemical compound 1,2,3-propanetriol which has the following formula: 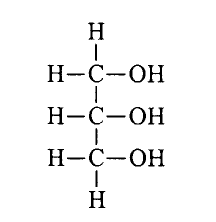 Glycerine is also referred to as glycerol.

As used herein, the term "crude glycerine" refers to a commercially-available composition comprising from about 80% to about 90% glycerine, typically from about 5% to about 20% water, and various impurities including inorganic salts, such as sulfates and phosphates, and organic substances, such as fatty acids.

As used herein, the term "refined glycerine" refers to a commercially-available composition comprising from about 90% to about 100% glycerine, typically from about 0.3% to about 10% water, and minor amounts of impurities.

### I. COMPOSITION

The compositions of the present invention for treating the footing material in a performance arena comprise glycerine, aqueous liquid carrier, and other optional ingredients including, but not limited to, emulsifier, bittering agent, corrosion inhibitor, antimicrobial agent, mold inhibitor, insect repellent, perfume, and colorant.

### A. GLYCERINE

Glycerine compositions are preferred for treating footing material in a performance arena, especially due to glycerine's desirable affinity for water and its high degree of solubility in a variety of liquid carriers, such as water, alcohol solvents, and mixtures thereof. Glycerine's affinity for water provides desirable humectant properties useful for maintaining and controlling moisture levels and freezing-point depression. The humectant qualities of glycerine allow it to capture moisture from the atmosphere, or lose it, depending on the humidity level and the water content of the footing material. Glycerine has relatively low volatility, as evidenced by a boiling point of 290°C, which makes it particularly suitable for use in the present compositions. The low volatility of glycerine, combined with its desirable hygroscopicity, allows the present footing treatment compositions containing glycerine to effectively suppress dust for relatively lengthy periods of time under widely varying conditions of temperature and/or relative humidity, especially when compared to using water to suppress dust.

The environmental friendliness of glycerine makes it a highly desirable material in the present compositions, methods, and articles. Glycerine is completely biodegradable in nature. *See* HANDBOOK OF ENVIRONMENTAL DATA ON ORGANIC CHEMICALS (2d ed., K. Verschueren ed., Van Nostrand Reinhold, New York, 1983), which is hereby incorporated by reference. Glycerine compositions are particularly desirable for treating footing material in performance arenas due to glycerine's relatively low toxicity to animals and humans. Glycerine is readily absorbed from the gastro-intestinal tract and metabolized by standard biochemical pathways in mammals. A discussion of the biochemical use of glycerine is presented in C.H. Werkman, GLYCEROL ch. 9 (Carl S. Miner & N.N. Dalton eds., 1953), which is hereby incorporated by reference. Glycerine is also desirable from a health and safety standpoint due to its designation as "generally recognized as safe" ("GRAS") by the Food and Drug Administration ("FDA") under 21 C.F.R. § 182.1320 as a miscellaneous and/or general purpose food additive and under 21 C.F.R. § 582.1320 for use in animal feed. The aquatic toxicity (TLm96) for glycerine is > 1000 mg/L, which is defined by NIOSH as an insignificant hazard. *See W.* Hann & P.A. Jensen, *Water Quality Characteristics of Hazardous Materials* (Texas A&M Univ., College Station, 1974), which is hereby incorporated by reference. In a forty-eight hour static *daphnia magna* test using crude glycerine, no immobility is observed during the study and the no-observed effect concentration ("NOEC") is determined to be 1000 mg/L due to the absence of adverse effects. Environmental concerns thus make glycerine a highly desirable material to use in the present compositions, methods, and articles.

The texture of footing material in a performance arena is improved when treated with the glycerine compositions of the present invention. Glycerine imparts a desirable firmness and friability to the footing material to enhance traction and stability of the footing material. This aids the performance of the athletes and animals using the performance arena and helps to prevent slipping and falling that can lead to serious injuries. For example, in a horse arena, the application of the present glycerine compositions to footing material causes the footing material to become more firm or friable, like moist soil, but not sticky, muddy, or soft. The horses walk and trot on the treated footing with softer steps and quicker turns, without dragging hooves through the upper layer of footing. The horse is not encumbered by footing stuck to the hooves. Glycerine does not tend to stick to animal hooves, athletic shoes, or equipment.

Glycerine is particularly useful for treating footing material in performance arenas used by animals, especially horses. Glycerine acts as a leather and/or hoof conditioner, due to its moistening properties, which prevents the drying and cracking of animal hooves. This is especially important for horses, since brittle hooves can crack, leading to bacterial infections and discomfort when walking or trotting. Animal hooves become conditioned and moisturized as the animal moves about on the surface of the footing material that has been treated with a glycerine composition of the present invention. Glycerine treated footing material is also good for human footwear.

Glycerine is commercially available in a variety of qualities and grades, such as crude glycerine and refined glycerine. Crude glycerine is typically a by-product of soap manufacture or derived from hydrolysis or methylation of fats and oils to produce fatty acids or fatty acid methyl esters. Crude glycerine is primarily glycerine and water with small amounts of inorganic salts such as sodium chloride, sodium sulfate, and/or sodium phosphate, and small amounts of organic matter such as unreacted triglycerides, mono/diglycerides or related esters, fatty acid, polyglycerols, proteinaceous material, and trace color and odor bodies. Crude glycerine typically comprises from about 80% to about 90% glycerine, typically from about 5% to about 20% water, and various impurities including inorganic salts and organic substances. The pH of crude glycerine is usually adjusted to about 7.5, if necessary, to assure that no appreciable free sodium hydroxide is present. Refined glycerine is typically crude glycerine that has been processed via distillation or similar methods as sold for food and pharmaceutical use. A carbon-bleaching process step, or similar process steps, can be used to remove trace color and odor bodies from the refined glycerine. Refined glycerine typically comprises from about 90% to about 100% glycerine, typically from about 0.3% to about 10% water, and minor amounts of impurities. Examples of refined glycerine useful in the present compositions are SUPEROL® USP-grade glycerine, which is at least about 99.7% glycerine, and INDUSTEROL™ glycerine, which is at least about 90% glycerine, both of which are available from The Procter & Gamble Company. Glycerine can be provided in the present compositions by utilizing either crude glycerine or refined glycerine.

Surprisingly, however, 100% refined glycerine compositions are not preferred for treating footing material in a performance arena. Compositions of 100% refined glycerine exhibit unique properties on footing material that are undesirable. These properties include the tendency of 100% refined glycerine compositions to remain on top of the footing material and clump together in globules. This is visually demonstrated in **FIG. 1**. If the surface of the footing material is not level, these globules of glycerine tend to move about the surface of the footing material, similar to globules of mercury when it is placed on a hard surface. **FIG. 1** shows a 1 foot by 1 foot area of footing material, which is a mixture of soil and sand taken from a horse arena, 5 minutes after treatment with 100 ml of a 100% refined glycerine composition (SUPEROL® from The Procter & Gamble Company). The treatment method used in **FIG. 1** through **FIG. 5** is described in Example II, *infra.* **FIG. 1** demonstrates that the 100% refined glycerine composition clumps together to form globules on the footing material and does not evenly distribute across the surface of the footing material. In order for glycerine compositions to be effective for treating footing material in a performance arena, the compositions must disperse evenly across the surface of the footing material and penetrate the surface to evenly distribute throughout the footing material. Significant and costly effort is required to sufficiently mix a 100% refined glycerine composition throughout the footing material. **FIG. 2** through **FIG. 5** demonstrate that dilute compositions of glycerine distribute much more evenly across the surface of the footing material. The present compositions thus contain glycerine at levels of from about 0.5% to about 90%, preferably from about 20% to about 80%, more preferably from about 30% to about 70%, by weight of the composition.

Additionally, compositions of 100% refined glycerine are difficult to apply due to their relatively high viscosity and relatively high freezing points. Viscosity data and curves for glycerine solutions are known in the art and can be found in PHYSICAL PROPERTIES OF GLYCERINE AND ITS SOLUTIONS 10-11 (Glycerine Producers' Ass'n, New York), and J.B. Segur & Helen Oberstar, 43 IND. & ENG. CHEM. 2117-20 (1951), which are incorporated herein by reference. Freezing point data and curves for glycerine solutions are also known in the art and can be found in PHYSICAL PROPERTIES OF GLYCERINE AND ITS SOLUTIONS 12-13 (Glycerine Producers' Ass'n, New York), and L.B. Lane, 17 IND. ENG. CHEM. 924 (1925), which are incorporated herein by reference. Dilute glycerine compositions can be more easily applied, especially when spraying the compositions in colder climates, due to their relatively lower viscosity and relatively lower freezing points. Also, dilute glycerine compositions are typically less expensive than 100% refined glycerine compositions.

### B. LIQUID CARRIER

The compositions of the present invention contain a liquid carrier, preferably aqueous, typically selected from the group consisting of water, ethanol, methanol, n-propanol, isopropanol, butanol, and mixtures thereof, to form the dilute glycerine compositions of the present invention. A liquid carrier is required, as shown in **FIG. 1** through **FIG. 5**, to permit a more even distribution of the present glycerine compositions across the surface of the footing material in a performance arena and to reduce the viscosity of the present compositions, which allows easier application of the compositions. Also, dilute compositions tend to be less expensive. Preferably, the liquid carrier is water, which can be deionized, distilled, well, or tap water. Water is the preferred liquid carrier due to its low cost, availability, safety, and environmental compatibility. In addition, glycerine is readily soluble in water, which eases the processing of the present compositions. The level of liquid carrier in the present compositions is dependent upon the level of other materials present, but typically the liquid carrier will be from about 5% to about 99.5%, preferably from about 20% to about 80%, more preferably from about 30% to about 60%, by weight of the composition. The level of liquid carrier is sufficient to create compositions having a viscosity, at 20°C, of less than about 1150 cPs, preferably less than about 22 cPs, more preferably less than about 10 cPs.

### C. EMULSIFIER

The present compositions can contain emulsifier to improve the spreading, e.g. dust contacting, ability of the present compositions by aiding the distribution of the compositions across the surface of the footing material and/or increase product durability by delaying biodegradation, when applied to footing material in a performance arena, especially arenas previously treated with oil-based substances. Suitable emulsifiers for use in the present compositions include, but are not limited to, soap and/or synthetic surfactants, e.g. anionic surfactants like sulfates and/or sulfonates, and nonionic surfactants such as sorbitan monoesters and monoglycerides, including, but not limited to, glycerol monostearate, glycerol monolaurate, glycerol monooleate, and glycerol monopalmitate; and mixtures thereof. Other suitable emulsifiers include a variety of food-grade emulsifiers discussed in Y. Pomeranz, FUNCTIONAL PROPERTIES OF FOOD COMPONENTS 331-80 (2d ed., Academic Press, 1991), which is hereby incorporated by reference. The present compositions can contain emulsifiers at levels of from about 0.1% to about 20%, preferably from about 0.5% to about 10%, more preferably from about 1% to about 5%, by weight of the composition.

### D. BITTERING AGENT

A bittering agent is desirable in the present compositions to deter humans and animals, especially horses, from eating and ingesting treated footing material. Some horses are naturally prone to eating untreated footing material, which can lead to the serious and sometimes fatal condition known as "colic." Common causes of colic include intestinal parasitism, vascular events, and intestinal malpositions, obstruction or impaction, any of which can result in necrosis of bowel segments, total obstruction, intestinal rupture, and/or death. A bittering agent is thus useful to prevent animals and humans from eating footing material and thus prevent colic in animals such as horses.

Suitable bittering agents include, but are not limited to, denatonium benzoate, brucine, quassin, sucrose octa-acetatc, quinine, caffeine, and various tannins. A preferred bittering agent is denatonium benzoate, which is commercially available from Macfarlan Smith Ltd. under the tradename BITREX® and has the following formula: 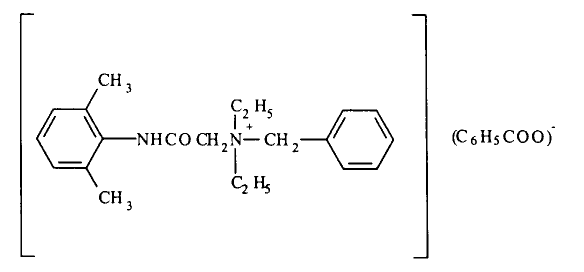 To help deter animals and humans from eating footing material, the present compositions preferably contain BITREX® at levels from about 0.0001% to about 1%, preferably from about 0.001% to about 0.5%, more preferably from about 0.05% to about 0.1%, by weight of the composition.

### E. CORROSION INHIBITOR

The dust suppression compositions of the present invention can optionally contain at least one inhibitor to protect against the corrosion of metals. These corrosion inhibitors preferably prevent the corrosion of either ferrous or non ferrous metals (e.g., copper, bronze, brass, titanium, and aluminum) or both. While glycerine itself has little corrosive tendency, dilute glycerine compositions can tend to be corrosive. Corrosion inhibitors are thus desirable in the present compositions in order to protect against the corrosion of a variety of vehicles, machinery, and equipment used in and around performance arenas, such as sprayers, tractors, gates, fences, horse shoes, and the like. Corrosion inhibitors are also desirable to prevent the corrosion of metal storage drums in which the present compositions can be kept. The corrosion inhibitor can be organic or inorganic in nature. Usually it is sufficiently soluble in water to provide a satisfactory inhibiting action, but it need not be water-soluble. Corrosion inhibitors can be used in the present compositions at levels of from about 0.1% to about 5%, preferably from about 0.2% to about 2%, more preferably from about 0.5% to about 1%, by weight of the composition. Suitable corrosion inhibitors for use in the present compositions include organic compounds such as mineral and vegetable oils and their sulfonated products and amines, amides, benzoates, fatty acids, mercaptans, sebacates, and triazoles, known in the art, and inorganic compounds such as certain silicate, phosphate, borate, sulfate, nitrate, nitrite, chromate, molybdate, tungstate, amine, azole, and alkali compounds also known in the art. Preferably, the corrosion inhibitor is a phosphate compound. Phosphates suitable in the present invention include, dipotassium phosphate ("DKP"), disodium phosphate, monopotassium phosphate, tripotassium phosphate, monosodium phosphate, trisodium phosphate, and mixtures thereof. Any compatible salt may be used including sodium, potassium, lithium, and similar salts. A preferred corrosion inhibitor for use in the present compositions is DKP.

### F. ANTIMICROBIAL AGENT

An antimicrobial agent is desirable in the present compositions to enhance product stability over periods of time, reduce the amounts of airborne bacteria, mold, or fungus and prevent bacterial infection of animal hooves. Glycerine is biodegradable and thus compositions utilizing glycerine tend to degrade over time. While this is a desirable characteristic for environmental reasons, the commercial life of such products can be short. The inclusion of an antimicrobial agent can extend the product stability of such compositions.

Some humectants are a breeding ground for certain microorganisms. For example, glycerine is an important nutrient for bacteria, yeasts, and molds. However, glycerine at high concentrations can actually inhibit the growth and multiplication of microorganisms. In general, a concentration of about 25% to about 30% glycerine is enough to restrain the multiplication of certain bacteria. Fungi require a greater concentration of glycerine to prove germicidal than bacteria. A detailed discussion of the biochemical use of glycerine can be found in C.H. Werkman, GLYCEROL ch. 9 (Carl S. Miner & N.N. Dalton eds., 1953), which is hereby incorporated by reference. Contamination of the present compositions by certain microorganisms with subsequent microbial growth can result in an unsightly and/or malodorous solution. Also, footing material in performance arenas can become contaminated by microorganisms from animal waste, especially from horse droppings. As an animal moves about on the surface of the footing material, such microorganisms can adhere to and grow in animal hooves, thus causing bacterial infection and disease. It is desirable that the present compositions, especially those having a low concentration of glycerine, contain an antimicrobial agent to prolong the shelf-life of the compositions and/or to prevent possible bacterial infections of animal hooves.

It is preferable to use a broad spectrum antimicrobial agent, e.g., one that is effective on both bacteria (both gram positive and gram negative) and fungi. A limited spectrum antimicrobial agent, e.g., one that is only effective on a single group of microorganisms, e.g., fungi, can be used in combination with a broad spectrum antimicrobial agent or other limited spectrum antimicrobial agent with complimentary and/or supplementary activity. A mixture of broad spectrum antimicrobial agents can also be used. In some cases where a specific group of microbial contaminants is problematic (such as Gram negatives), aminocarboxylate chclators can be used alone or as potentiators in conjunction with other antimicrobial agents. These chelators which include, e.g., ethylenediaminetetraacetic acid ("EDTA"), nitrilotriacetic acid ("NTA"), hydroxyethylenediaminetriacetic acid, diethylenetriaminepentaacetic acid, and other aminocarboxylate chelators, and mixtures thereof, and their salts, and mixtures thereof, can increase the effectiveness of the antimicrobial agent against Gram-negative bacteria, especially *Pseudomonas* species.

The antimicrobial agent in the present invention is included at an effective amount. The term "effective amount" as herein defined means a level at least sufficient to prevent spoilage, or prevent growth of inadvertently added microorganisms, for a specific period of time. Antimicrobial agent is preferably being used to prevent spoilage of the humectant solution in order to increase the shelf-life of the composition. The antimicrobial agent can also be used to prevent microorganism growth and infection on animal hooves, especially on horse hooves.

A preferred antimicrobial agent for use in the present invention are organic compounds containing 3-isothiazolone groups. This class of compounds is disclosed in Lewis et al., U.S. Patent No. 4,265,899, issued May 5, 1981, and incorporated herein by reference. A preferred antimicrobial agent is a water-soluble mixture of 5-chloro-2-methyl-4-isothiazolin-3-one and 2-methyl-4-isothiazolin-3-one, more preferably a mixture of about 77% 5-chloro-2-methyl-4-isothiazolin-3-one and about 23% 2-methyl-4-isothiazolin-3-one, a broad spectrum preservative available as a 1.5% aqueous solution under the trade name KATHON® CG by the Rohm & Haas Company. Another preferred antimicrobial agent is KATHON® CG/ICP II, also from the Rohm & Haas Company, which has the same actives as KATHON® CG, but in a different matrix of stabilizers.

When KATHON® is used as the antimicrobial agent in the present invention it is present at a level of from about 1 ppm to about 100 ppm, preferably from about 1 ppm to about 10 ppm, more preferably from about 3 ppm to about 7 ppm, by weight of the composition.

Other isothiazolins include 1,2-benzisothiazolin-3-one, available under the trade name PROXEL® products; and 2-methyl-4,5-trimethylene-4-isothiazolin-3-one, available under the trade name PROMEXAL®, Both PROXEL® and PROMEXAL® are available from Zeneca. They have stability over a wide pH range (i.e., 4-12). Neither contain active halogen and are not formaldehyde releasing preservatives. Both PROXEL® and PROMEXAL® are effective against typical Gram negative and positive bacteria, fungi and yeasts when used at a level from about 0.001% to about 0.5%, preferably from about 0.005% to about 0.05%, and most preferably from about 0.01% to about 0.02%, by weight of the usage composition.

Other examples of antimicrobial agents can be found in Trinh et al., U.S. Patent No. 5,714,137, issued February 3, 1998, which is incorporated herein by reference.

### G. MOLD INHIBITOR

Mold is a problem in livestock and performance arenas, especially where the footing material includes hay and/or wood shavings, which are typical carriers for molds. One reason molds cause problems is that they produce dangerous mycotoxins, some of which are carcinogenic. For example, one of the common molds, *Asperqillus Flavus,* produces the mycotoxin aflotoxin which, in addition to other toxic characteristics, interferes with the immune system's ability to produce gamma globulin, a protein that is part of the immune system. The resulting breakdown of the immune system renders animals and humans that have ingested such mold more susceptible to a variety of diseases. The present dust suppression compositions without mold inhibitor will reduce the amount of airborne molds, so as to reduce such risks. However, it is also desirable that the present compositions contain a mold inhibitor to amplify this effect. Mold inhibitors useful in the present compositions include, but are not limited to, propionic acid and salts thereof, such as ammonium propionate, sodium propionate, potassium propionate, and mixtures thereof. Propionate salts are preferred over propionic acid due to their more acceptable odor, lower corrosivity, and lower volatility. A mold inhibitor is included in the present compositions at levels from about 0.2% to about 2%, preferably from about 0.2% to about 1%, more preferably from about 0.2% to about 0.5%, by weight of the composition.

### H. INSECT REPELLENT

Animals and humans in and around performance arenas are frequently troubled by various types of insects such as horse flies, face flies, horn flies, lice, mosquitoes, fleas, ticks, and the like, which prey upon them causing irritation and sometimes infection of the skin, eyes and ears. This not only results in interference with an animal's normal feeding and grazing habits, and a person's enjoyment of a performance arena, but can result in serious illness or even death of the animal or person, since insects are often carriers of infectious diseases. As a result, it is desirable that the present compositions contain an insect repellent. When applied to the footing material in a performance arena, the present compositions containing insect repellent create an environment in the arena that reduces populations of these various insects, due to the repellent properties of the compositions. Suitable insect repellents which are effective against horse flies, horn flies, face flies, stable flies, house flies, mosquitoes, lice, fleas, ticks, and mites include bioresmethrin, permethrin, tetramethrin, cypermethrin, decamethrin, pyrethrins, resmethrin, cyhalothrin, allethrin, dichlorvos, carbaryl, naled, citrus oils, citronella oil, pine oil, stirofos, fenvalerate, stabilene, benzyl benzoate, methyl nonyl ketone, N-butylacetanilide, di-n-propyl isocinchomeronate, 2-octylthioethanol, dimethyl carbate, dimethyl phthalate, N,N-diethyl-m-toluamide, and 2,3:4,5-bis (2-butylene)-tetrahydro-2-furfural, and mixtures thereof. A preferred insect repellent for use in the present compositions is N,N-diethyl-m-toluamide, which is also known as "DEET." The present compositions can contain insect repellent at levels of from about 0.1% to about 20%, preferably from about 0.5% to about 10%, more preferably from about 1% to about 5%, by weight of the composition.

### I. PERFUME

Perfumes can optionally be added to the present compositions. Perfume is useful to mask any unpleasant odor of the present compositions and/or to mask animal odors in performance arenas. Many perfumes known in the art are suitable for use in the present compositions. Preferred perfumes, especially when the present compositions are applied in and around a horse arena, exhibit perfume characters described as "musk," "leather," "outdoor," "cedar," and/or "pine." Perfume levels in the present compositions are adjusted to provide an acceptable scent level and masking function.

### J. COLORANT

Colorants and dyes can be optionally added to the glycerine compositions of the present invention for visual appeal and to distinguish the product from other products kept in and around performance arenas. When colorants are used, they are used at extremely low levels to avoid staining the footing material. Preferred colorants for use in the present compositions are highly water-soluble dyes, e.g., Liquitint® dyes available from Milliken Chemical Co. Non-limiting examples of suitable dyes are, Liquitint Blue HP®, Liquitint Blue 65®, Liquitint Patent Blue®, Liquitint Royal Blue®, Liquitint Experimental Yellow 8949-43®, Liquitint Green HMC®, Liquitint Yellow II®, and mixtures thereof, preferably Liquitint Blue HP®, Liquitint Blue 65®, Liquitint Patent Blue®, Liquitint Royal Blue®, Liquitint Experimental Yellow 8949-43®, and mixtures thereof.

The present compositions effectively suppress respirable dust particles in a performance arena, meaning those dust particles having diameters of less than about 5µm, preferably less than about 2 µm, more preferably less than about 0.5 µm.

The present compositions effectively suppress dust at humidity levels of less than about 90%, preferably down to less than about 50%, and more preferably down to less than about 30%.

Depending upon the concentration of glycerine in the composition and the amount of the composition applied to the footing material, a single application of the present compositions to footing material effectively suppresses dust in performance arenas for at least seven days, preferably at least three months, more preferably at least six months.

Freezing-point depression is an important property of the present glycerine compositions, especially for use in performance arenas for which the highest period of use corresponds to winter months, when sub-zero temperatures and low humidity levels aggravate dust problems. The freezing points of the present compositions are important due to the desire to store and use the present compositions for dust suppression, improving the texture of footing material, preventing animals and humans from eating footing material, and preventing the drying and cracking of animal hooves in cold climates and during winter months. The freezing points of the present compositions are less than about 0°C, preferably less than about -15°C, more preferably less than about -45°C. To obtain an optimal freezing point of the compositions, the present compositions comprise from about 60% to about 70% glycerine, by weight of the composition. A composition comprising 66.7% glycerine and 33.3% water is a eutectic composition that has a freezing point of about -46°C.

Viscosity is another important property of the present glycerine compositions. First, the present compositions must have a sufficiently low viscosity in order to be easily applied, for example through a spraying device, to the performance arenas. Second, viscosity is important so the compositions provide effective dust suppression for relatively lengthy periods of time. As animals or athletes move about the footing material in a performance arena, the footing material particles are cleaved into finer particles. Compositions having relatively high viscosity will not spread over the newly exposed surfaces, and dust problems will recur within relatively shorter periods of time. The present compositions should have sufficiently low viscosity in order to spread more effectively over new particle surfaces, thus effectively suppressing dust for relatively longer periods of time. The present compositions exhibit a viscosity at a temperature of 20°C (68°F) of less than about 1150 cPs, preferably less than about 200 cPs, more preferably less than about 22 cPs, and even more preferably less than about 10 cPs. To obtain optimal viscosity of the compositions, the present compositions comprise from about 30% to about 50% glycerine, by weight of the composition. Compositions having less than about 50% glycerine and water exhibit viscosity, at 20°C, of less than about 10 cPs.

### II. METHOD OF USE

The present invention encompasses methods of treating footing material in a performance arena comprising contacting the footing material with glycerine, preferably using the glycerine compositions of the present invention, to provide at least one benefit selected from the group consisting of effectively suppressing dust, improving the texture of the footing material, preventing the eating and ingesting of the footing material by animals and humans, conditioning animal hooves, and combinations thereof. Preferred methods include contacting the footing material with compositions comprising glycerine and at least about 10%, more preferably at least about 20%, and even more preferably at least about 30%, by weight, of liquid carrier. The present compositions can be applied to the footing material in a performance arena using a variety of application systems. These include projecting the present composition as is, or diluted, as a spray, a stream, or a mist to substantially evenly contact the footing material with the present composition. Spraying the compositions can be accomplished through a combination of a SPRAYING SYSTEMS® wand (with attached pressure gauge), through calibrated nozzles, through a conventional garden hose sprayer, or through a similar device. The present compositions can be propelled from a storage tank to the spraying device via hydrostatic force, a pump, or via pressurizing the storage tank. The pump can be selected from a number of conventional designs: positive displacement (i.e., FLOW-JET®), diaphragm, roller, or other pump designed for transporting liquids with viscosity of the compositions of the present invention at the target flow rates. The pump can be driven by an electric motor or internal-combustion engine. The applicator of the present compositions can choose to connect the storage tank, pump (if used), and the spraying device via a hose with roughly the same length as the arena, and apply the composition by hand. The application system can use a sufficiently long hose to apply the present compositions to specialized areas of a performance arena, such as stalls where horses or other animals are stabled. More preferably, the tank, pump, and spraying device are mounted on a trailer and pulled by a lawn or farm tractor. An example of the latter application system is made by Fimco in Sioux City, Iowa and designated the SK604R model. If the compositions are applied to the footing material by spraying, the compositions preferably have a viscosity, at 20°C, of less than about 200 cPs, more preferably less than about 22 cPs, even more preferably less than about 10 cPs. In many cases, equipment designed to apply oil, water, or calcium chloride solution can be used to apply the present composition with little or no modification.

The present compositions can be applied so that the footing material in a performance arena is substantially evenly contacted. Alternatively, an application system can allow heavier application in areas used more frequently, if so desired. In a horse arena, the arena's outer edge and center tend to be used more often than other parts of the arena and, therefore, have higher concentrations of fine particles and a greater need for dust suppression, thus justifying a heavier application of the present compositions. The application system should be adjusted to a delivery rate of from about 0.5 to about 20 gallons per minute ("gpm"), preferably from about 1 to about 10 gpm, more preferably from about 2 to about 5 gpm. In general, the present compositions are applied to the footing material to provide glycerine at a level of from about 4 L/m³ to about 128 L/m³. For coarse sand footing material, the present compositions are typically applied to provide glycerine at a level of from about 4 L/m³ to about 20 L/m³, preferably from about 6 L/m³ to about 10 L/m³, more preferably from about 7 L/m³ to 9 L/m³. For fine sand footing material, the present compositions are applied to provide glycerine at a level of from about 20 L/m³ to about 80 L/m³, preferably from about 30 L/m³ to about 50 L/m³, more preferably from about 35 L/m³ to 45 L/m³. For organic footing material, the present compositions are applied to provide glycerine at a level of from about 32 L/m³ to about 128 L/m³, preferably from about 48 L/m³ to about 80 L/m³, more preferably from about 56 L/m³ to 72 L/m³. The footing material in a performance arena is treated with the present compositions initially and then again after about seven days, although one can wait about three months, or even about six months, depending on the amount of glycerine in the composition and amount of the composition applied to the footing material. After an initial treatment with the present compositions, subsequent treatments of the footing material can be effective, depending on the composition, by applying reduced amounts of the present compositions, after the initial treatment begins to lose its effectiveness. In subsequent treatments, the present compositions are typically applied to the footing material to provide glycerine at a level of from about 2 L/m³ to about 64 L/m³. For subsequent treatments of coarse sand footing material, the present compositions are typically applied to provide glycerine at a level of from about 2 L/m³ to about 10 L/m³, preferably from about 3 L/m³ to about 5 L/m³, more preferably from about 3.5 L/m³ to 4.5 L/m³. For subsequent treatments of fine sand footing material, the present compositions can be applied to provide glycerine at a level of from about 5 L/m³ to about 40 L/m³, preferably from about 15 L/m³ to about 25 L/m³, more preferably from about 17.5 L/m³ to 22.5 L/m³. For subsequent treatments of organic footing material, the present compositions can be applied to provide glycerine at a level of from about 16 L/m³ to about 64 L/m³, preferably from about 24 L/m³ to about 40 L/m³, more preferably from about 28 L/m³ to 36 L/m³.

Alternatively, the present compositions can be applied in two or more doses, separated by at least one step where the compositions are mixed with the footing. The mixing can be accomplished by a number of mechanical processes, including, but not limited to, raking, harrowing, or tilling, by hand or with mechanical assistance, e.g., by the aid of a tractor. The purpose of the mixing step(s) is to provide improved penetration and distribution of the composition through the footing. This method is especially useful, and sometimes necessary, when applying large doses per area of footing material, notably when the dosage exceeds about 2 L/m².

Another method of use encompassed by the present invention comprises contacting footing material in a performance arena with the compositions of the present invention according to the methods hereinbefore in an effective amount to improve the texture of the footing material. When applied to footing material, the present compositions impart a desirable texture to the footing material, making it more firm and friable, which aids the performance of animals and athletes using the performance arena. The same levels used to suppress dust can provide this benefit. The level required is varied according to the type of footing material, the amount the performance arena is used by animals and/or athletes (more use = higher level), and the temperature and humidity conditions (lower levels require more glycerine).

Another method of use of the present invention comprises contacting footing material in a performance arena, preferably a horse arena, with the compositions of the present invention according to the methods hereinbefore to condition and prevent the drying and cracking of animal hooves, preferably horse hooves. As the animal, preferably a horse, moves about the footing material, the hooves become conditioned and lubricated due to the moistening properties of the present compositions. This is important to prevent the drying and cracking of animal hooves, especially horse hooves, which can lead to infections and discomfort resulting in the animal becoming lame.

### III. ARTICLE OF MANUFACTURE

The present invention also encompasses articles of manufacture comprising: (1) a container, (2) a composition, and (3) a set of instructions.

The articles of manufacture of the present invention can provide dust suppression benefits, improve the texture of footing material in performance arenas, prevent animals and humans from eating footing material, and prevent the drying and cracking of animal hooves. The compositions of the present articles of manufacture are packaged in a container. Suitable containers for the present articles of manufacture include, but are not limited to, metal drums, plastic drums, totes, bottles, sprayers, pails, and tank trucks, which can be lined with a lining material to prevent contamination of the composition and/or corrosion of the container. The container can additionally have a spraying device and/or a pump attached, to facilitate the application of the composition to the surface to be treated.

The compositions contained in the present articles of manufacture include the compositions of the present invention described hereinbefore. The present articles of manufacture can also contain compositions consisting of glycerine only.

The container of the present articles of manufacture is in association with a set of instructions which comprises the instruction to apply an effective amount of the composition to footing material in a performance arena, especially a horse arena, preferably to provide at least one benefit selected from the group consisting of suppressing dust, improving the texture of the footing material, conditioning animal hooves, and combinations thereof. As used herein, the phrase "in association with" means the instructions are either directly printed on the container itself or presented in a different manner including, but not limited to, a brochure, print advertisement, electronic advertisement, and/or verbal communication, so as to communicate the set of instructions to a consumer of the article of manufacture.

When the compositions of the present articles of manufacture consist of glycerine only, the set of instructions comprises the instruction to dilute said glycerine with at least about 5%, preferably at least about 10%, more preferably at least about 20%, and still more preferably at least about 30% by weight of liquid carrier selected from the group consisting of water, alcohol solvent, and mixtures thereof to form a dilute composition and contact footing material in a performance arena, preferably a horse arena, with said dilute composition to suppress dust, improve the texture of the footing material, and/or condition animal hooves. When the present articles of manufacture contain the compositions of the present invention, the set of instructions comprises the instruction to contact footing material in a performance arena with the compositions of the present invention to suppress dust, improve the texture of the footing material, prevent animals and humans from eating the footing material, and/or condition animal hooves. Preferably, the set of instructions further comprises the instruction to apply the present compositions to the footing material to provide glycerine at a level of from about 4 L/m³ to about 128 L/m³. More preferably, the set of instructions comprises the instruction to apply the present compositions to coarse sand footing material to provide glycerine at a level of from about 4 L/m³ to about 20 L/m³, preferably from about 6 L/m³ to about 10 L/m³, more preferably from about 7 L/m³ to 9 L/m³. The set of instructions can also comprise the instruction to apply the present compositions to fine sand footing material to provide glycerine at a level of from about 20 L/m³ to about 80 L/m³, preferably from about 30 L/m³ to about 50 L/m³, more preferably from about 35 L/m³ to 45 L/m³. The set of instructions can also comprise the instruction to apply the present compositions to organic footing material to provide glycerine at a level of from about 32 L/m³ to about 128 L/m³, preferably from about 48 L/m³ to about 80 L/m³, more preferably from about 56 L/m³ to 72 L/m³.

The set of instructions can further comprise the instruction to treat the footing material once about every seven days, preferably once about every three months, more preferably once about every six months. The set of instructions can still further comprise the instruction to apply the compositions substantially evenly across the entire surface of the footing material, or to apply the compositions more heavily in areas where the footing material is subjected to more frequent use by animals and/or athletes. The set of instructions can still further comprise the instruction to divide treatments into two or more doses separated by one or more steps where the treated footing is mixed to promote penetration and distribution of the treatment.

In a preferred embodiment, an article of manufacture for treating footing material in a performance arena, preferably a horse arena, comprises:
(a) a container;
(b) a composition comprising glycerine; and
(c) a set of instructions in association with said container comprising the instructions to dilute said glycerine, when necessary, to provide at least about 20% by weight of liquid carrier selected from the group consisting of water, alcohol solvent, and mixtures thereof, to form a dilute composition and contact said footing material in a performance arena with said dilute composition to suppress dust in said performance arena.

All of the documents and references referred to herein are incorporated by reference, unless otherwise specified. All parts, ratios, and percentages herein, in the Specification, Examples, and Claims, are by weight and all numerical limits are used with the normal degree of accuracy afforded by the art, unless otherwise specified.

The following are non-limiting examples of the present invention.

### EXAMPLE I

The following examples illustrate various dust suppressant compositions according to the present invention:

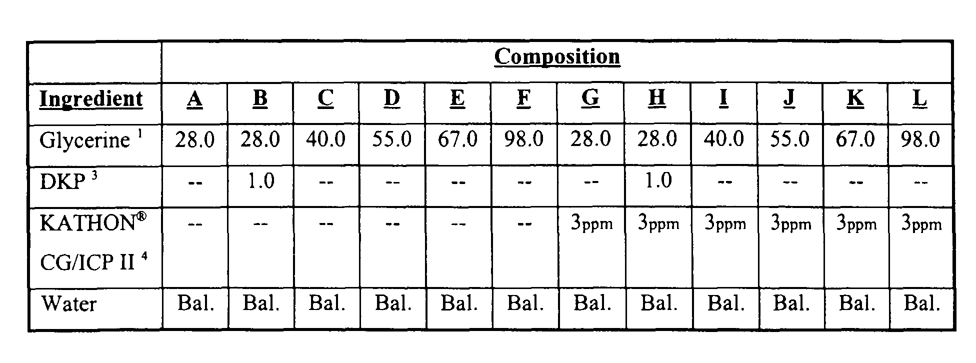

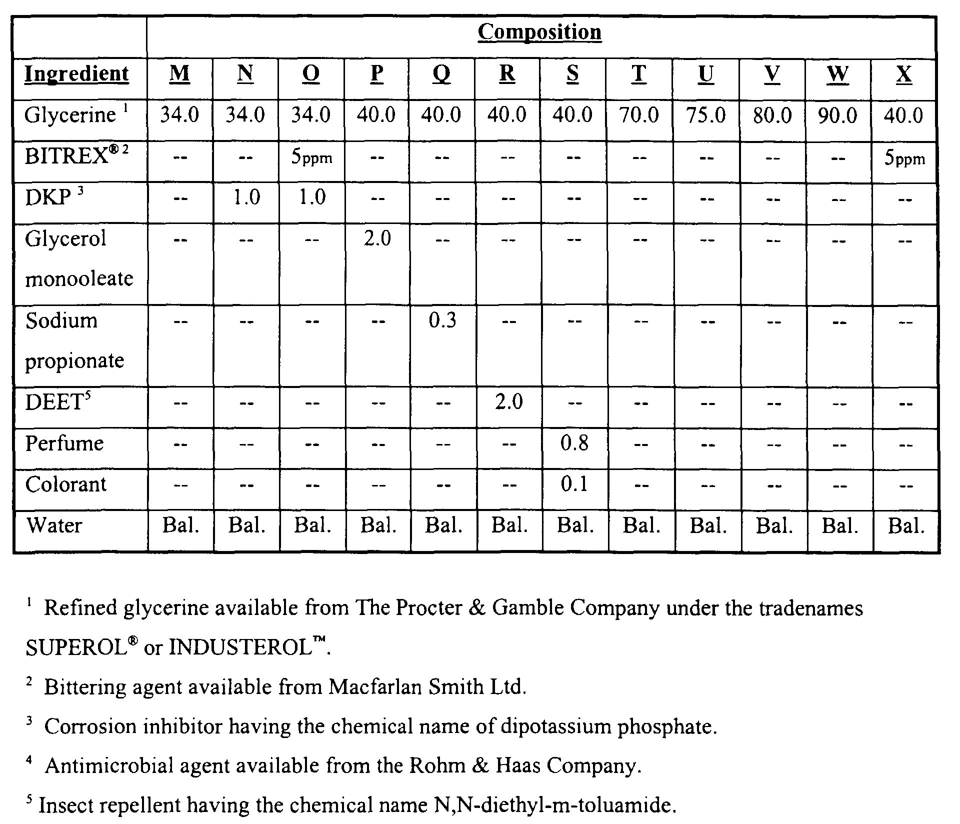

### EXAMPLE II

The comparative example which provides the results shown in **FIG. 1** through **FIG. 5** is conducted as follows. Coarse sand footing material is taken from an indoor horse arena. The footing material is then spread about 0.75 inches thick on five one-square-foot floor tiles. Five test compositions are prepared containing 100% refined glycerine (SUPEROL® from The Procter & Gamble Company), 90% refined glycerine/10% water, 80% refined glycerine/20% water, 75% refined glycerine/25% water, and 70% refined glycerine/30% water. One of the compositions is then applied to one of the tiles of footing material by spraying the composition through a hand-held spray bottle from the Cole-Parmer Co., catalog #E-06091-00. The compositions are applied in an amount of about 100 ml per one square foot, which is equal to about 1.08 liters per square meter, by squeezing the trigger of the hand-held spray bottle while holding the spray bottle about one foot above the surface of the footing material.

The three compositions of 100% refined glycerine, 90% refined glycerine/10% water, and 80% refined glycerine/20% water, come out of the sprayer as a stream and make the trigger of the spray bottle difficult to squeeze. These three compositions tend to bead on the surface of the footing material, forming globules in low-lying arenas, as demonstrated in **FIGS. 1, 2**, and **3**. Footing material where globules of the 100% refined glycerine composition remain is still shiny after one hour, demonstrating that the composition does not fully penetrate the surface layer of the footing material within an hour.

The two compositions of 75% refined glycerine/25% water, and 70% refined glycerine/30% water, both dispense as a mist and the trigger of the spray bottle is easier to squeeze as compared to applying the other three compositions. The trigger of the spray bottle is easier to squeeze with the 70% refined glycerine/30% water composition than with the 75% refined glycerine/25% water composition. Both of these compositions are quickly absorbed into the footing material, as demonstrated in **FIGS. 4** and **5**.

### EXAMPLE III

The following tables show the dust suppression effectiveness of various compositions of the present invention. Coarse sand footing material is taken from an indoor horse arena. One hundred grams of untreated footing material is analyzed for particle size distribution using standard sieve trays, certified to comply with ASTM method E-11, that are shaken for 30 minutes in a mechanical shaker. By weighted average calculation, the mean particle size of the footing material is about 753 pm. It is believed that compositions suppress dust by agglomerating smaller particles into larger clusters, which are then more difficult to disperse in air as dust. It is thus believed that compositions more effective in suppressing dust will allow less of the treated footing to pass through the smaller mesh sieves. Another 100 grams of untreated footing material is then analyzed for particle size distribution after being treated with water in an amount of 20.0 L/m³. Additional analyses of particle size distribution are conducted with 100 grams of footing material treated with a 40% refined glycerine/60% water composition at treatment levels of 10.0 L/m³, 15.0 L/m³, and 20.0 L/m³. Another analysis of particle size distribution is conducted with 100 grams of footing material treated with a 67% refined glycerine/33% water composition at a treatment level of 20.0 L/m³. The results of each analysis of particle size distribution are shown in the following tables:

| | | **Sieve Mesh No. (Particle Size)** | | | |
|---|---|---|---|---|---|
| | | **No. 14 (>1.4mm)** | **No. 50 (300µm-1.4mm)** | **No. 100 (150 µm-300 µm)** | **No. 140 (106 µm-150 µm)** |
| **Composition** | **Amount Applied** | | | | |
| No treatment | N/A | 30.24 | 34.79 | 10.99 | 4.33 |
| Water | 20.0 L/m³ | 24.58 | 42.32 | 12.98 | 8.45 |
| C | 10.0 L/m³ | 27.27 | 38.56 | 12.27 | 4.1 |
| C | 15.0 L/m³ | 27.17 | 39.66 | 12.85 | 6.26 |
| C | 20.0 L/m³ | 23.68 | 42.91 | 14.2 | 12.95 |
| E | 20.0 L/m³ | 27.34 | 38.04 | 27.51 | 7.67 |

| | | **Sieve Mesh No. (Particle Size)** | | | |
|---|---|---|---|---|---|
| | | **No. 200 (75 µm-106 µm)** | **No.325 (44 µm-75 µm)** | **< No. 235 (<44 µm)** | **Last Three Trays (< 106 µm)** |
| **Composition** | **Amount Applied** | | | **FINE DUST** | **INHALEABLE DUST** |
| No treatment | N/A | 4.57 | 5.36 | 8.71 | 18.64 |
| Water | 20.0 L/m³ | 4.24 | 7.46 | 1.92 | 13.62 |
| C | 10.0 L/m³ | 5.21 | 5.17 | 7.36 | 17.74 |
| C | 15.0 L/m³ | 4.39 | 5.15 | 6.29 | 15.83 |
| C | 20.0 L/m³ | 4.14 | 3.73 | 0.71 | 8.58 |
| E | 20.0 L/m³ | 0.77 | 1.27 | 0.34 | 2.38 |

This shows that footing material treated with water exhibits a noticeable reduction in fine dust (78%) and in inhaleable dust (27%) versus untreated footing material. This also shows that a 40% refined glycerine/60% water composition is effective at reducing fine dust (92%) and inhaleable dust (54%) at the same treatment level as water. It is further shown that a 67% refined glycerine/33% water composition is effective at reducing fine dust (96%) and inhaleable dust (87%) versus untreated footing material.

At least 15.0 L/m³ of a 40% refined glycerine/60% water composition should be applied to the footing material to equal the performance of water applied at a level of 20.0 L/m³. A 40% refined glycerine/60% water composition applied at a level of 20.0 L/m³ suppresses dust even more effectively. A 67% refined glycerine/33% water composition applied at a level of 20.0 L/m³ will exceed the performance of water applied at a level of 20.0 L/m³, as well as a 40% refined glycerine/60% water composition applied at a level of 20.0 L/m³.

### EXAMPLE IV

As described by the following, a horse arena with coarse sand footing material is treated with a composition of the present invention and gravimetric measurements of dust levels are made. The horse arena is an enclosed steel-on-wood structure, with a riding ring measuring 132' x 60' (7,920 ft²), together with an attached storage area bringing the total width to 72'. The footing material is clay sand, to a depth of about 4 inches. Clay sand provides a cushioning that is desirable to equestrians, but this is obtained with a moderate level of fine dust particles. The horses' hooves tend to cut through the sand footing material, impeding action and generating large amounts of dust. Dust levels are measured gravimetrically at six points, by placing plastic sheets on the footing material in each of the four corners of the arena and at the ¼ and ¾ positions along the center line of the arena. The plastic sheets are weighed before being placed on the footing material. After about forty-five minutes of horses moving about the footing material, the plastic sheets are again weighed. The difference in weight of the plastic sheets is attributed to the amount of dust settling onto the sheets. The average dust levels for the closed horse arena are about 0.98 g/m³, by gravimetric measurement, following vigorous riding activity. With two large twelve foot doors opened to provide a draft through the horse arena, the dust levels drop to about 0.70 g/m³, by gravimetric measurement. However, at both levels of dust, horses and riders were caked with dust, leading to coughing and eye irritation (i.e., contact lens problems). The footing material in the horse arena is then leveled using a chain-link fence attached to a wooden beam with spikes that is dragged by a tractor. With a loader-tractor used to hold the tank, the 40% refined glycerine/60% water composition is applied as evenly as possible to the central riding area of the horse arena, with slightly heavier application in the corners and edges subject to high use. The average treatment amount is 10.4 liters of the composition per cubic meter of footing material. A light application of rinse water then follows, to promote mixing. While the smell of the solution is distinct, it subsides noticeably the following day. The 40% refined glycerine/60% water composition is adsorbed rapidly by the sand footing material, causing it to bind to an adherent texture, resembling soil. With evaporation and riding activity, the texture becomes more friable, but it is moist, and there is no noticeable dust. Trainer and rider observations are firstly over the absence of dust, then on the bounciness of the footing material, on the tighter maneuvers permitted by better adhesion, and finally on riding over, rather than cutting through the sand.

### EXAMPLE V

The following table shows the corrosive effects of various compositions of the present invention. The designated compositions are tested according to a modified ASTM standard D 1384. The metal specimens are assembled with size, material, arrangement, and spacers as specified in ASTM D 1384. The test is conducted for a period of 14 days (336 hours). The test temperature is 160°F (71°C). The test is conducted in accordance with ASTM D 1384, except that no aeration is used, no condenser is used, and the designated compositions were tested once, not in triplicate.

| | **Corrosion Weight Change of Metals** (milligrams) | | | | | |
|---|---|---|---|---|---|---|
| **Composition** | **Solder** | **Brass** | **Copper** | **Steel** | **Cast Iron** | **Cast Aluminum** |
| M | 13.6 | 0.1 | 0.0 | 7.3 | 18.1 | 0.0 |
| N | 0.1 | 0.0 | 0.0 | 0.0 | 0.0 | 0.0 |
| O | 0.0 | 0.1 | 0.3 | 0.0 | 0.0 | 0.0 |

This shows that while a 34% refined glycerine/66% water composition can cause some corrosion in some metals in longer term use, the compositions containing DKP at a level of about 1.0% are not corrosive. Composition O contains about 1.0% DKP and is also non-corrosive, even though it contains about 5 ppm BITREX®, which is a corrosive material.

### EXAMPLE VI

The following table shows the response of various compositions of the present invention to three different microbes, including Gram positive, Gram negative, and fungal species that are tested as both vegetative cells and as more resistant spores, which are commonly found in indoor performance arenas.

Gram positive species (cocktail of equal volume of each separate species) include *Bacillus* species, such as *B. thuringiensis* and *B. sphaericus,* both of which are spore formers commonly found in soils and dust. Both species are tested as resistant spores.

Gram negative species (cocktail) include *Escherichia coli, Klebsiella oxytoca, Pseudomonas aeruginosa, Pseudomonas cepacia, Pseudomonas fluorescens, Citrobacter freundii, Serratia liquefaciens,* and *Acinetobacter calcoaceticus.* The Gram negatives are non-spore formers and are commonly associated with fecal material and or contaminated waters. They are tested as vegetative cells.

Fungal species (cocktail) include *Aspergillus niger, Aspergillus ustus, Penicillium chrysogenum* and *Penicillium luteum,* all of which are common spore-forming soil and dust inhabitants. These potential fungal contaminants are tested as both vegetative and spore inocula in the various glycerine compositions.

The following table shows the results after 2 weeks of exposure of various glycerine compositions to said microbes. The initial level of inoculum for each cocktail of test species is as follows (log₁₀):
1) Gram negative - 6.7
2) Gram positive - 5.1
3) Fungal spores - 6.7
4) Fungal vegetative cells - 7.2

Results in the table indicate the log reduction versus the initial challenge two weeks (fourteen days) after challenge:

| **Composition** | **Gram (-) Vegetable Cells (log Reduction)** | **Gram (+) Spores (log Reduction)** | **Fungal Vegetable Cells (log Reduction)** | **Fungal Spores (log Reduction)** |
|---|---|---|---|---|
| A | 1.0 | 2.1 | 0.5 | 0 |
| B | 1.0 | 2.2 | 0.4 | 0 |
| C | 1.8 | 2.4 | 0.7 | 0 |
| D | 4.1 | 2.2 | 0.3 | 0 |
| E | 4.0 | 2.4 | 0.2 | 0 |
| F | >7.0 | 2.0 | 1.6 | 3.7 |
| G | >7.0 | 2.3 | 3.8 | 1.1 |
| H | >7.0 | 2.2 | >5 | 0.7 |
| I | >7.0 | 2.2 | 3.9 | 4.5 |
| J | >7.0 | 2.3 | 2.6 | 2.3 |
| K | >7.0 | 2.3 | 0.9 | 1.6 |

This data demonstrates that compositions containing high levels of glycerine, preferably about 98%, are reasonably robust against bacterial and fungal vegetative cells and spores. Complete eradication of the Gram negative vegetative cells is observed. Although total eradication of fungal vegetative cells, and bacterial and fungal spores is not observed, compositions containing about 98% glycerine demonstrate a substantial reduction in their numbers over a two week test period. No preservatives or antimicrobial agents are needed in compositions containing about 98% glycerine to preserve the compositions.

Compositions containing an intermediate level of glycerine, preferably from about 55% to about 67%, water, and KATHON® demonstrate eradication of the Gram negative inoculum, and a substantial reduction in the bacterial spores, and fungal vegetative cells and spores, as is expected for this antimicrobial agent. In aqueous compositions having from about 55% to about 67% glycerine without KATHON®, a substantial reduction (4 log) of Gram negative inoculum is observed. However, fungal vegetative cells and spores are only marginally, or not at all, controlled (< 1-2 log reduction) which could result in recovery of the contaminants and contamination of these products during long term storage and/or use. A preservative or antimicrobial active is preferred in compositions containing glycerin at an intermediate level of preferably about 55% to about 67%.

Compositions containing a low level of glycerine, preferably from about 28% to about 55%, are well preserved with KATHON®, but the unpreserved products demonstrate minimal to nil reduction in all bacterial and fungal inocula. Therefore, longer term storage of, or repeated challenges/contamination of, these compositions are expected to result in potential product contamination by many of if not all of these microbial contaminants. A preservative or antimicrobial active is therefore preferred in compositions containing a lower level of glycerine, preferably from about 28% to about 55%.

Other preservatives such as quaternary compounds, cyclic nitrogen materials and phenolic preservatives or antimicrobial actives provide preservative and antimicrobial stability to these glycerine compositions as well, such as those disclosed in Trinh et al., U.S. Patent No. 5,714,137, issued February 3, 1998, which is hereby incorporated by reference.

### EXAMPLE VII

The following table demonstrates the recommended dosage of glycerine for long-term dust suppression in a performance arena for three types of footing material: coarse sand, fine sand, and organic. In a quart-sized glass jar, 100 mL of footing material is contacted with Composition C in increasing amounts until no dust is visible when the footing is shaken vigorously. The treated footing material is exposed to ambient air for 48 hours and again is shaken and observed. More treatment composition is added until no dust is observed in a shaken sample 48 hours after the last treatment. The total amount of Composition C and total amount of glycerine delivered are recorded in the table below as an illustration of recommended dosage levels. The footing material's mean particle size is determined by drying the untreated footing in a vacuum oven overnight at 120°C, and shaking the dried footing for 30 minutes through a series of standard sieve trays, certified to comply with ASTM method E-11. The mean particle size is calculated as the weighted average of particles in each sieve tray.

| **Footing Type** | **Mean Particle** | **Recommended Dosage,** | **Recommended Dosage,** |
|---|---|---|---|
| | **Size (µm)** | **Total Amount of Composition C Per Volume of Footing Material (L/m**^{**3**} **footing)** | **Total Amount of Glycerine Per Volume of Footing Material (L/m**^{**3**} **footing)** |
| Coarse Sand | 496 | 20.0 | 8.0 |
| Fine Sand | 241 | 100.0 | 40.0 |
| Organic (Soil/Manure Mix) | 300 | 160.0 | 64.0 |

### EXAMPLE VIII

As described by the following, a horse arena with coarse sand footing material is treated with a composition of the present invention and dust levels are measured using an air sampling device. The initial dust level before treatment is measured while riding a horse in the arena for 15 minutes, minimum, at a gallop, canter or trot. During the riding, dust readings are recorded once per second by a Haz-Dust II^{TM} personal air monitor, manufactured by Environmental Devices Corporation. During the riding, the dust monitor is kept within thirty feet of the horse and about three feet above the footing surface. After fifteen minutes of riding, the average dust readings are 6.34 mg/m³. The arena is then treated with Composition C at an average dosage level of seven liters of the composition per cubic meter of footing material. The composition is applied in two passes using a tractor-mounted sprayer. After treatment, dust levels are measured, as before, using the Haz-Dust II^{TM} air monitor, and the average dust levels are 0.10 mg/m³. One month after applying Composition C, the average dust levels are 0.86 g/m³, when measured using the Haz-Dust II^{TM} and the method noted above. No water or other dust control treatments are applied between the application of Composition C and the follow-up dust level reading one month later. Total dust reduction is 98% immediately after treatment and 86% one month after treatment.

## Claims

1. A composition for treating footing material in a performance arena comprising:
(a) glycerine;
(b) at least about 5% by weight of liquid carrier selected from the group consisting of water, alcohol solvent, and mixtures thereof;
(c) an effective amount of at least one material selected from the group consisting of: emulsifier, preferably selected from the group consisting of soap, food-grade emulsifier, anionic surfactant, nonionic surfactant, and mixtures thereof; bittering agent, preferably denatonium benzoate; corrosion inhibitor, preferably dipotassium phosphate; antimicrobial agent, preferably a 3-isothiazolone compound; mold inhibitor, preferably a propionate salt; insect repellent, preferably N,N-diethyl-m-toluamide; perfume; colorant; and mixtures thereof.

2. A composition according to Claim 1, wherein said composition comprises either: (a) from about 60% to about 70% glycerine, from about 30% to about 40% water, and from about 1 ppm to about 10 ppm antimicrobial agent; or (b) from about 30% to about 50% glycerine, from about 50% to about 70% water, and from about 1 ppm to about 10 ppm antimicrobial agent.

3. A method of treating footing material in a performance arena, optionally selected from a horse arena, a race track, a baseball diamond, a rodeo arena, or a moto-cross arena, comprising the step of contacting said footing material with a composition comprising glycerine, preferably crude glycerine, and at least about 5% by weight of liquid carrier selected from the group consisting of water, alcohol solvent, and mixtures thereof; wherein said composition preferably comprises either: (a) from about 60% to about 70% glycerine and from about 30% to about 40% water; or (b) from about 30% to about 50% glycerine and from about 50% to about 70% water; and wherein said composition optionally further comprises an effective amount of at least one material selected from the group consisting of emulsifier, bittering agent, corrosion inhibitor, antimicrobial agent, mold inhibitor, insect repellent, perfume, colorant, and mixtures thereof.

4. A method according to Claim 3, wherein said footing material is contacted with said composition to provide glycerine at a level of from about 4 L/m³ to about 128 L/m³, preferably from about 4 L/m³ to about 20 L/m³ when said footing material is course sand; from about 20 L/m³ to about 80 L/m³ when said footing material is fine sand; and from about 32 L/m³ to about 128 L/m³ when said footing material is organic footing; said footing material preferably being contacted with said composition at least once about every three months, and preferably providing a benefit selected from the group consisting of suppressing dust, improving the texture of said footing material, conditioning animal hooves, and mixtures thereof.

5. An article of manufacture comprising:
(a) a container;
(b) a composition comprising glycerine; and
(c) a set of instructions in association with said container comprising the instruction to dilute said glycerine with at least about 5% by weight of liquid carrier selected from the group consisting of water, alcohol solvent, and mixtures thereof, to form a dilute composition and contact footing material in a performance arena with said dilute composition to provide a benefit selected from the group consisting of suppressing dust, improving the texture of said footing material, conditioning animal hooves, and mixtures thereof; said performance arena preferably being a horse arena; said set of instructions preferably further comprising the instruction to contact said footing material with said dilute composition to provide glycerine at a level of from about 4 L/m³ to about 128 L/m³.

6. An article of manufacture comprising:
(a) a container;
(b) a composition comprising:
(i) glycerine;
(ii) at least about 5% by weight of liquid carrier selected from the group consisting of water, alcohol solvent, and mixtures thereof;
(iii) an effective amount of at least one material selected from the group consisting of emulsifier, bittering agent, corrosion inhibitor, antimicrobial agent, mold inhibitor, insect repellent, perfume, colorant, and mixtures thereof; and
(c) a set of instructions in association with said container comprising the instruction to contact footing material in a performance arena, preferably a horse arena, with said composition to provide a benefit selected from the group consisting of suppressing dust, improving the texture of said footing material, preventing animals and humans from eating said footing material, conditioning animal hooves, and mixtures thereof.

7. An article of manufacture according to Claim 6, wherein said set of instructions further comprises the instruction to contact said footing material with said composition to provide glycerine at a level of from about 4 L/m³ to about 128 L/m³, preferably from about 4 L/m³ to about 20 L/m³ when said footing material is course sand; from about 20 L/m³ to about 80 L/m³ when said footing material is fine sand; from about 32 L/m³ to about 128 L/m³ when said footing material is organic footing.
